# EUROPEAN PATENT SPECIFICATION

(11) **EP 0 391 277 B1**
(45) Date of publication and mention of the grant of the patent: **09.08.1995**
(21) Application number: 90106161.4
(22) Date of filing: 30.03.1990
(51) Int. Cl.: G06K 15/00

(54) **Printer capable of vertical and lateral writing**
Drucker, geeignet zum vertikalen und lateralen Drucken
Imprimante pouvant imprimer verticalement et latéralement

(30) Priority: 01.04.1989 JP 83336/89
(43) Date of publication of application: 10.10.1990
(73) Proprietor: SHARP KABUSHIKI KAISHA, Osaka-shi Osaka 545 (JP)
(72) Inventor: Sakamoto, Koichiro, Sakai-shi, Osaka-fu (JP); Shigematsu, Hiroyuki, Yamatokoriyama-shi, Nara-ken (JP)
(74) Representative: TER MEER STEINMEISTER & PARTNER GbR

(56) References cited:
- DE-A- 2 056 986
- DE-A- 3 425 679
- PATENT ABSTRACTS OF JAPAN vol. 13, no. 545 (M-902) 06 December 1989, & JP-A-01 226350 (CANON INC.) 11 September 1989,
- PATENT ABSTRACTS OF JAPAN vol. 12, no. 257 (M-719) 20 July 1988, & JP-A-63 039350 (FUJI XEROX CO.LTD.) 19 February 1988,
- PATENT ABSTRACTS OF JAPAN vol. 11, no. 11 (E-470) 13 January 1987, & JP-A-61 186071 (FUJITSU LTD.) 19 August 1986,

## Description

### BACKGROUND OF THE INVENTION

### Field of the Invention

The present invention generally relates to printers, and more particularly, to a printer capable of writing characters both vertically and laterally.

### Description of the Background Art

Some word processors are known as allowing selection of a desired format among a plurality of formats and printing characters in the selected format. In such word processors, a format is designated according to feeding direction of paper to be fed, alignment direction of characters to be printed, and the like. More specifically, at the time of loading sheets of paper into a cassette for feeding, selection can be made between a longitudinal feeding manner where the longitudinal direction of the printing sheets is parallel with the feeding direction, and a traverse feeding manner where the longitudinal direction of the printing sheets is orthogonal with the feeding direction. Additional selection is made between a lateral printing where alignment direction of characters to be printed is parallel with the moving direction of a printing head (perpendicular to the feeding direction), and a vertical printing where alignment direction of the characters is orthogonal with the moving direction of the printing head.

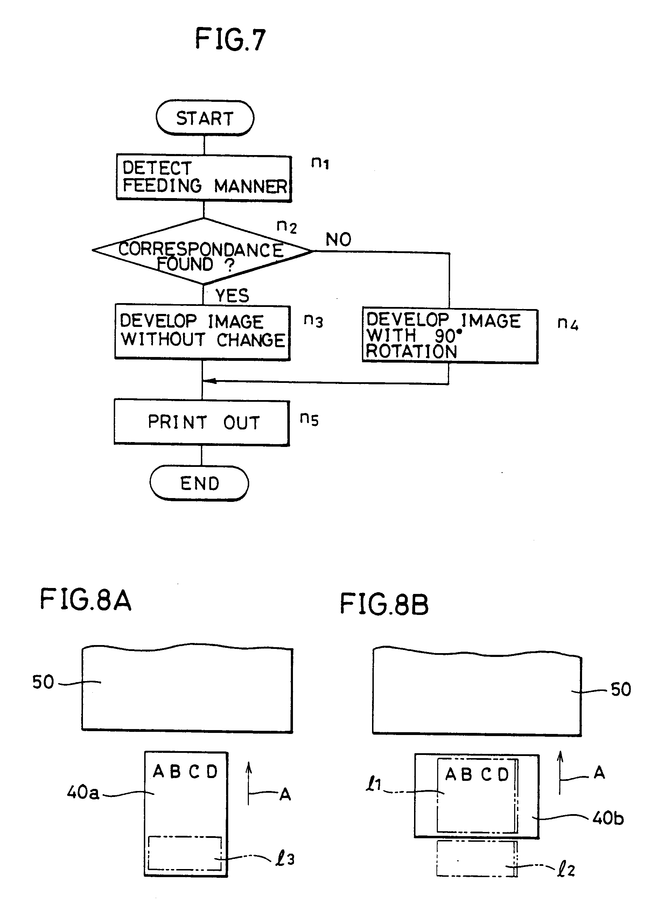

In Fig. 8A, there are shown sheets of paper 40 being fed into a printer 50 in the longitudinal feeding manner. When a format of "longitudinal feeding and lateral writing" has been set, the alignment direction of characters is orthogonal with the longitudinal direction of a printing sheet 40a (parallel with feeding direction A of the printing sheets 40), as shown in Fig. 8A with a character-string of "ABCD".

If the printing sheets 40 of A4 size are fed into the printer 50 in the so-called traverse feeding manner, as shown in Fig. 8B, while the above-mentioned format "longitudinal feeding and lateral writing" has been set, character-strings will be printed only in an area ℓ1 of a printing sheet 40b which could overlap with the printing area of the printing sheet 40a fed in the longitudinal feeding manner. However, since the remaining printing area ℓ2 (corresponding to an area ℓ3 indicated by two-dot chain line on the longitudinally fed sheet 40a in Fig. 8A) do not overlap with the traversely fed sheet 40b, printing information for the area ℓ2 can not be printed.

DE-OS-34 25 679 discloses features of a printer capable of vertical and lateral writing, which are considered in the preamble part of claim 1. Such a printer comprises storage means for storing character information to be printed, feeding means having a receiving portion which receives printing sheets, printing means for printing the character information stored in said storage means on said printing sheets fed by said feeding means, and control means for controlling the printer. Further, there are provided means for rotating a bit-matrix to print said matrix stored in said storage means either in longitudinal or in lateral direction on said printing sheets.

JP-A-63 039 350 discloses an image direction switching system of a printer which makes it unnecessary to increase the capacity of a character pattern ROM and to replace cassettes when changing the printing direction with respect to the feeding direction of the printing sheets. If a comand for lateral printing or longitudinal printing is entered from a panel, character patterns which are read from a character pattern ROM are sequentially stored into the adresses of a bit map memory. When printing characters in a direction which corresponds to the feeding direction of the printing sheets (so called landscape lateral writing, contrary to portrait lateral writing), character data stored in the bit map memory are read from a start adress at the lower-left-most point of the page to be printed. The reading direction in the bit map memory corresponds to the feeding direction, i.e. in a direction from bottom to top of the page. The printer prints the data in a direction from the left-most corner of the printing sheet to the right-most corner, from top to bottom.

JP-A-61 186 071 discloses a data transfer system for bit map memory, in which a printer is provided additionalywith a mode converting section. The mode converting section applies mode switching between the landscape mode (printing of characters in feeding direction) and the portrait mode (printing of characters orthogonal to the feeding direction). The mode converting section controls the storage of a bit map memory, its transfer form and the output state of a converting section. A microprocessor reads the codes in a storage section corresponding to the content of a page to be printed, retrieves a character pattern generating device and stores a character pattern of the corresponding code to the bit map memory based on the comand of the mode converting section. When the converting section outputs a picture element data, the output state is controlled by the mode converting section.

### SUMMARY OF THE INVENTION

An object of the present invention is to enable printing of data in a desired manner whichever loading state has been selected for printing paper in a printer.

According to the present invention, a printer capable of vertical and lateral writing, comprising:
a storage means for storing character information to be printed;
feeding means having a receiving portion which receives printing sheets;
printing means for printing the character information stored in said storage means on said printing sheets fed by said feeding means; and
control means for controlling the printer;
said receiving portion receiving said printing sheets either in a predetermined direction or in a direction orthogonal with the predetermined direction for feeding said printing sheets loaded in said predetermined direction and in the direction orthogonal with said predetermined direction, from said receiving portion;
setting means being provided for setting a printing format by designating direction of said printing sheet to be fed and alignment direction of characters to be printed corresponding either to a vertical writing manner or to a lateral writing manner
characterized in that
detecting means are provided for detecting direction of said printing sheets fed by said feeding means; and in that
said control means further comprises:
determining means for determining whether or not the actual direction of said printing sheets detected by said detecting means corresponds to the direction having been set by said setting means for said printing sheets to be fed; and
reading means for reading out the character information stored in said storage means while, in response to the determination of non-correspondence by said determining means, rotating each character by 90° by an adress translation means adapted such that the character information to be printed with lateral writing in an upper-most row of the printing sheet fed in said predetermined direction are printed with vertical writing in a right-most column of a printing sheet fed orthogonal to said predetermined direction,
so that the control means control the printer such that even when the actual direction of said printing sheets detected by said detecting means does not correspond to that having been set by said setting means for said printing sheet to be fed, the character information stored in said storage means are read out and applied to said printing means so that printing is executed in the printing format having been set by said setting means.

According to the present invention, sheets of paper can be loaded either in a longitudinal direction or in a traverse direction into a cassette for storing printing paper. Direction of the printing sheets to be fed and alignment direction of characters to be printed are designated with setting means to set a printing format. A detector detects whether direction of the printing paper, or the longitudinal direction of the sheets is parallel or orthogonal with the feeding direction. Control means controls the printer such that even when the detected direction of the printing paper do not correspond to that having been set for the printing paper, character information is read out of storage means so that printing is executed in the set printing format, and. then applied to printing means. More specifically, printing manner of the printing means can be adjusted to any feeding manner by controlling the reading operation of the stored contents, corresponding to the direction of the printing sheets to be fed. Accordingly, printing can be effected in a desired format at any time, preventing the printing operation going on beyond an edge of a printing sheet.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of a word processor and its peripheral equipment to which an embodiment of the present invention has been applied.

Fig. 2 is a block diagram showing electrical structure of the word processor and its peripheral equipment shown in Fig. 1.

Fig. 3 is a perspective view showing a cassette being inserted into a laser printer, which feeds sheets of paper for printing.

Fig. 4 is a perspective view showing the cassette in Fig. 3 with its lid opened.

Figs. 5A and 5B are typical illustrations for explaining feeding manners of printing sheets according to an embodiment of the present invention.

Figs. 6A and 6B are illustrations for explaining image developing operation according to an embodiment of the present invention.

Fig. 7 is a flow chart for explaining operation of a printer according to an embodiment of the present invention.

Figs. 8A and 8B are illustrations for explaining printing manners of the printer which has been described as a background art.

### DESCRIPTION OF THE PREFERRED EMBODIMENTS

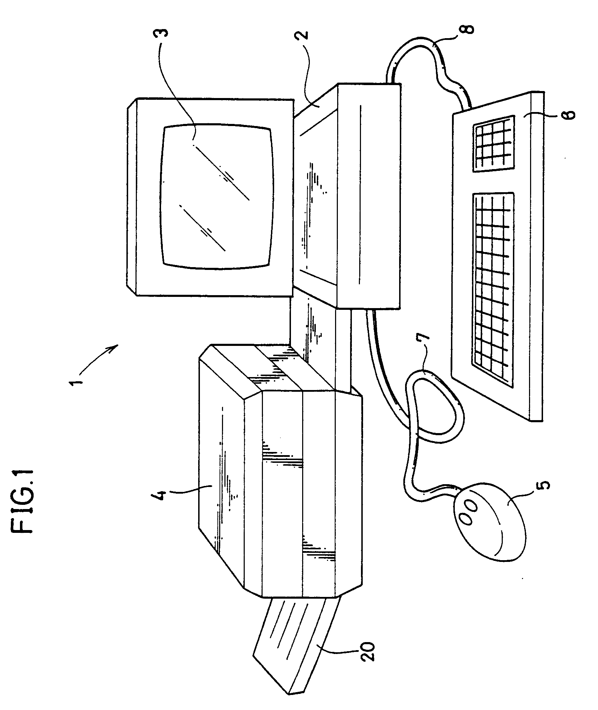

Referring to Fig. 1, description will be made on structure of a word processor and its peripheral equipment to which an embodiment of the present invention has been applied. On a main processing unit 2 of the word processor 1, there is rested a display unit 3 as constituted of a CRT (Cathode Ray Tube), for example. The main processing unit 2 is connected to a laser printer 4, and to an input device 5 called, for example, a mouse, and a keyboard 6 through connection codes 7 and 8, respectively.

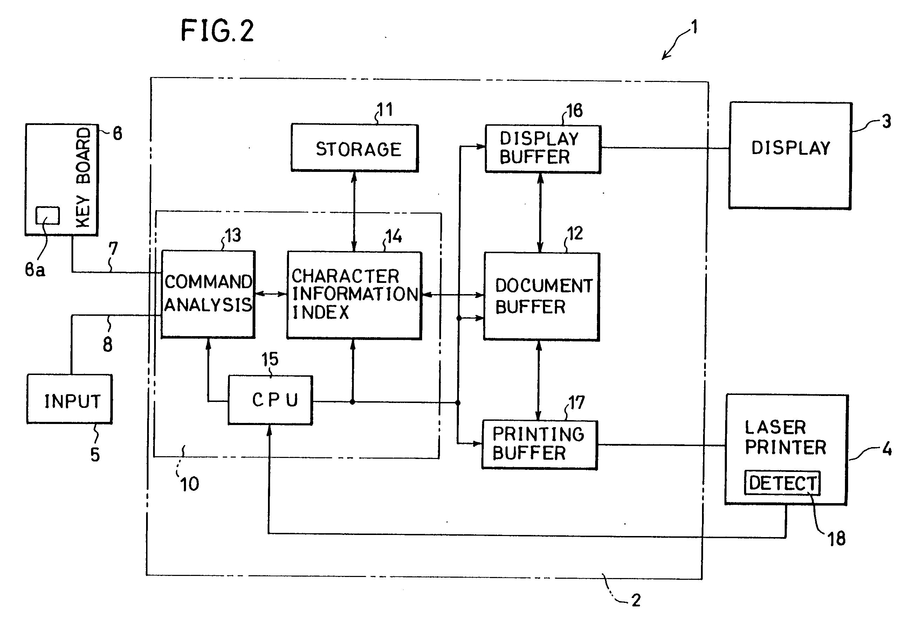

Referring to Fig. 2, electrical structure of the word processor 1 and its peripheral equipment will be described. The main processing unit 2 is provided with a main control portion 10 for controlling the entire apparatus, to which a storage 11 for storing a plurality of character fonts, a document buffer 12 for storing document information corresponding to entry information from the keyboard 6, and the like are connected. The main control portion 10 comprises a command analyzing portion 13 for analyzing several kinds of commands entered from the input device 5 and the keyboard 6, document information index portion 14 for reading out the character fonts in the storage 11 in response to output of the command analyzing portion 13, and a central control portion 15 for controlling all the above.

The document information stored in the document buffer 12 is supplied to the display unit 3 through a display buffer 16 and also to the laser printer 4 through a printing buffer 17. The laser printer 4 comprises a detecting portion 18 for detecting whether printing sheets to be fed have been loaded in the longitudinal or the traverse direction. Output of the detecting portion 18 is applied to the central control portion 15. The keyboard 6 is provided with a format setting key 6a for setting a format including size of printing paper, paper feeding manner, alignment direction of characters, and the like.

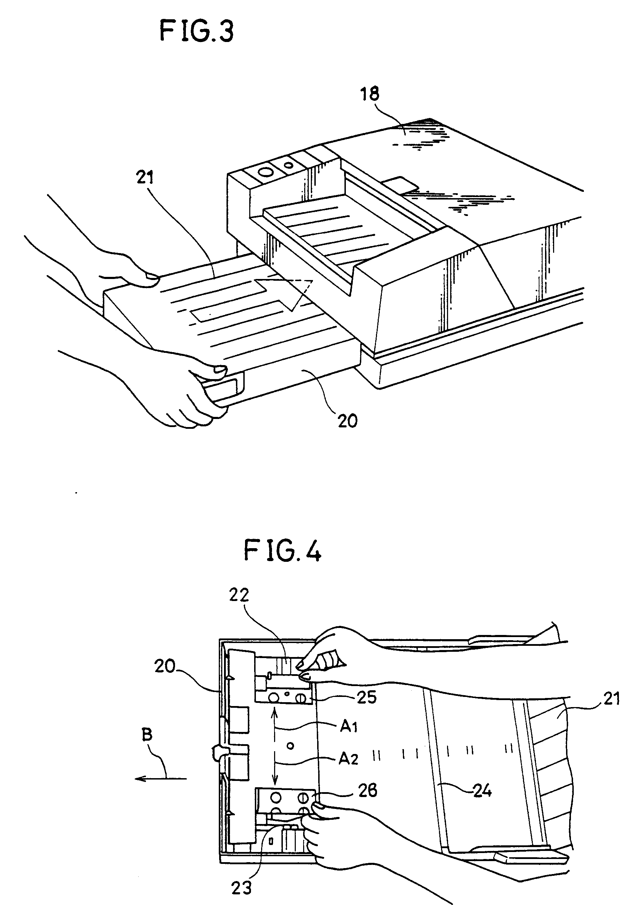

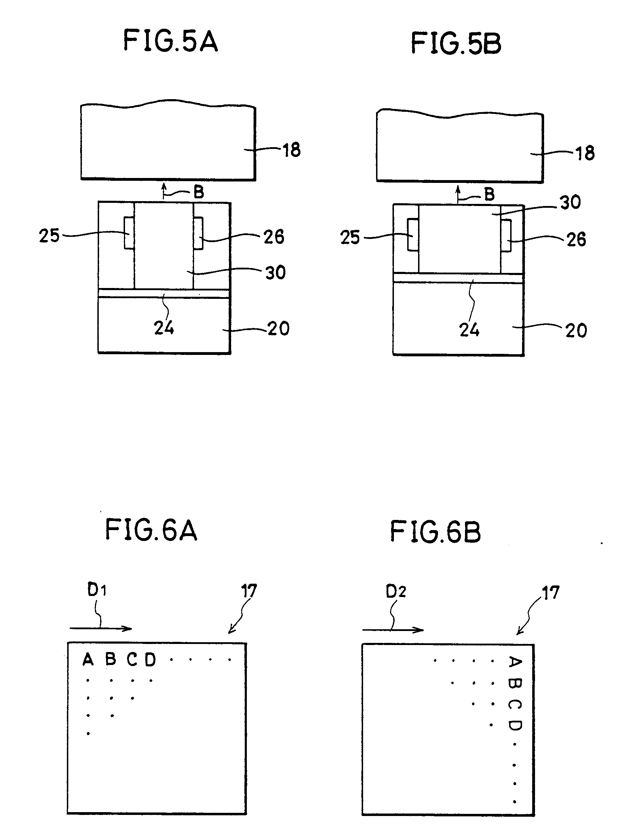

In Fig. 3, there is shown a cassette 20 for feeding printing sheets being inserted into the laser printer 4, and in Fig. 4, there is shown the cassette 20 with its lid 21 opened. The printing sheets loaded in the cassette 20 are of a A5 to A3 size, for example. Further, at the time of loading the printing sheets of the respective size, selection can be made between the longitudinal feeding manner where the longitudinal direction of the printing sheets is parallel with an inserting direction B of the cassette and the traverse feeding manner where the longitudinal direction is orthogonal with the cassette inserting direction B.

In the cassette 20, depending on size of the printing sheets and the feeding manner, length of the printing sheets in the cassette inserting direction is regulated by a trailing edge regulating plate 24 while another length of the printing sheets in their width direction orthogonal with the cassette inserting direction B is regulated by opposite edges regulating plates 25 and 26 which can move in the directions of arrows A1 and A2 through operation of levers 22 and 23, as shown in Fig. 4.

In Figs. 5A and 5B, there are shown typical feeding manners of the printing sheets. In Fig. 5A, printing sheets 30 of A4 size have been loaded in the longitudinal direction and in Fig. 5B, the printing sheets 30 of A4 size have been loaded in the traverse direction. In the traverse feeding manner, spacing between the opposite edges regulating plates 25 and 26 is larger than that in the longitudinal feeding manner, and the trailing edge regulating plate 24 is not retracted so far as in the longitudinal feeding manner. The size and the feeding manner of the printing sheets loaded in the cassette 20 are detected by the detecting portion 18 which is provided in association with the respective regulating plates 24, 25 and 26. A format where printing is executed in a direction parallel with the inserting direction B of the cassette 20 will be referred to as "vertical writing" and another format of printing in a direction orthogonal with the inserting direction B will be referred to as "lateral writing", hereinafter.

Referring to Figs. 6A and 6B, image developing operation will be described. Assuming for example that a format of "A4 longitudinal feeding and lateral writing" is set to execute a printing such that a printing sheet of A4 size is fed in the longitudinal feeding manner and characters are written in the lateral direction, data in the document buffer 12 are read out for image development without making any change and stored in the printing buffer 17 as printing data in such an arrangement as shown in Fig. 6A. When the printing is to be executed, the printing data are sequentially addressed in the direction indicated by arrow D1 and supplied to the laser printer 4. At this time, if the printing sheets have been loaded in the longitudinal direction, the printing in the format "A4 longitudinal feeding and lateral writing" can be realized normally.

If the printing sheets are loaded in the traverse direction while this format of "A4 longitudinal feeding and lateral writing" has been set, the image is developed with a 90° rotation in reading out the printing data from the document buffer 12 so that the printing data are stored in the printing buffer 17 in an arrangement as shown in Fig. 6B. More specifically, address translation is made such that the printing data to be printed with lateral writing in the upper-most row of the longitudinally fed printing sheet are printed with vertical writing in the right-most column of a traversely fed printing sheet. Meanwhile, in this case, the respective characters are rotated clockwise by 90°.

In this manner, the printing data stored in the printing buffer 17 are sequentially read out in the direction indicated by arrow D2. Accordingly, a printing which has been rotated clockwise by 90° is realized. Therefore, even if printing is effected on a traversely fed printing sheet when the format of "A4 longitudinal feeding and lateral writing" has been set, the same printing results as in the case of a longitudinally fed printing sheet can be obtained through the above-described image development. In other words, the same printing results can be obtained through the image development, irrespective of feeding manner of the printing sheets.

Referring to Fig. 7, operation of the printer according to an embodiment of the present invention will be described.

At step n1, feeding manner of the printing sheets loaded in the cassette 20 is detected by the detecting portion 18.

At step n2, it is determined whether or not the detected feeding manner corresponds to that in a presently set format. If it does, the operation proceeds to step n3 where printing data in the document buffer 12 are developed in an image without making any change and stored in the printing buffer 17.

When the detected feeding manner does not correspond to that having been set in the format, the operation proceeds to step n4 where the printing data read out from the document buffer 12 are rotated by 90°, as described above, before written in the printing buffer 17.

At step n5, the printing data having been written in the printing buffer 17 are supplied to the laser printer 4 which executes printing.

As has been described above, even when the feeding manner set in a format for printing sheets does not correspond to that of the printing sheets actually loaded in the cassette 20, the same printing results as in the case where they do correspond to each other can be obtained. Therefore, even if the printing sheets are loaded in a manner different from that having been set in the format, such an undesirable printing operation as has been described in the "description of the background art" can be prevented.

## Claims

1. A printer capable of vertical and lateral writing, comprising:
storage means (12) for storing character information to be printed;
feeding means (20) having a receiving portion which receives printing sheets (30);
printing means (4) for printing the character information stored in said storage means (12) on said printing sheets (30) fed by said feeding means (20); and
control means (10) for controlling the printer;
said receiving portion receiving said printing sheets (30) either in a predetermined direction or in a direction orthogonal with the predetermined direction for feeding said printing sheets (30) loaded in said predetermined direction and in the direction orthogonal with said predetermined direction, from said receiving portion;
setting means (6a) being provided for setting a printing format by designating direction of said printing sheet (30) to be fed and alignment direction of characters to be printed corresponding either to a vertical writing manner or to a lateral writing manner;
charcterized in that
detecting means (18) are provided for detecting direction of said printing sheets (30) fed by said feeding means (20); and in that
said control means (10) further comprises:
determining means (15) for determining whether or not the actual direction of said printing sheets (30) detected by said detecting means (18) corresponds to the direction having been set by said setting means (6a) for said printing sheets (30) to be fed; and
reading means (15) for reading out the character information stored in said storage means (12) while , in response to the determination of non-correspondence by said determining means (15), rotating each character by 90° by an adress translation means adapted such that the character information to be printed with lateral writing in an upper-most row of the printing sheet (30) fed in said predetermined direction are printed with vertical writing in a right-most column of a printing sheet fed orthogonal to said predetermined direction.
so that the control means control the printer such that even when the actual direction of said printing sheets (30) detected by said detecting means (18) does not correspond to that having been set by said setting means (6a) for said printing sheet (30) to be fed, the character information stored in said storage means (12) are read out and applied to said printing means (4) so that printing is executed in the printing format having been set by said setting means (6a).

## Patentansprüche

1. Drucker zum vertikalen und lateralen Drucken, mit
einem Speicher (12) zum Speichern von zu druckenden Zeicheninformationen;
einer Zuführvorrichtung (20) mit einem Aufnahmebereich zum Aufnehmen von Druckblättern (30);
einer Druckvorrichtung (4) zum Drucken der in dem Speicher (12) gespeicherten Zeicheninformationen auf die durch die Zuführvorrichtung (20) zugeführten Druckblätter (30); und mit
einer Steuerung (10) zum Steuern des Druckers;
wobei der Aufnahmebereich die Druckblätter (30) entweder in einer bestimmten Richtung oder in einer Richtung senkrecht zu der bestimmten Richtung aufnimmt, zum Zuführen der in der bestimmten Richtung und in der zu der bestimmten Richtung senkrechten Richtung geladenen Druckblätter (30) von dem Aufnahmebereich; und mit
einer Einstelleinrichtung (6a) zum Einstellen eines Druckformats durch Festlegen der Richtung des zuzuführenden Druckblatts (30) und der Orientierungsrichtung der zu druckenden Zeichen entsprechend entweder einer vertikalen oder einer lateralen Druckweise;
**dadurch gekennzeichnet,** daß
eine Erkennungseinrichtung (18) zum Erkennen der Richtung der durch die Zuführungsvorrichtung (20) zugeführten Druckblätter (30) vorgesehen ist; und daß
die Steuerung (10) weiterhin aufweist:
eine Bestimmungseinrichtung (15) zum Bestimmen, ob die durch die Erkennungseinrichtung (18) erkannte tatsächliche Richtung der Druckblätter (30) der durch die Einstelleinrichtung (6a) für die zuzuführenden Druckblätter (30) eingestellten Richtung entspricht oder nicht; und
eine Leseeinrichtung (15) zum Auslesen der in dem Speicher (12) gespeicherten Zeicheninformationen, während bei einer durch die Bestimmungseinrichtung (15) erkannten Nichtübereinstimmung jedes Zeichen um 90° durch eine Adressenumsetzungseinrichtung gedreht wird, so daß die bei lateralem Drucken in einer obersten Zeile des in der bestimmten Richtung zugeführten Druckblatts (30) auszudruckenden Zelcheninformationen in einer rechtsaußen gelegenen Spalte eines senkrecht zu der bestimmten Richtung zugeführten Druckblatts vertikal gedruckt werden,
so daß die Steuerung den Drucker derart steuert, daß, auch wenn die durch die Erkennungseinrichtung (18) erkannte tatsächliche Richtung der Druckblätter (30) nicht der für das zuzuführende Druckblatt (30) durch die Einstelleinrichtung (6a) eingestellten Richtung entspricht, die in dem Speicher (12) gespeicherten Zeicheninformationen ausgelesen und zu der Druckvorrichtung (4) geführt werden, so daß der Druckvorgang in dem durch die Einstelleinrichtung (6a) eingestellten Druckformat durchgeführt wird.

## Revendications

1. Imprimante capable d'écrire latéralement et verticalement, comprenant:
des moyens de mémorisation (12) pour mémoriser des informations de caractère à imprimer;
des moyens d'alimentation (20) ayant une partie de réception qui reçoit des feuilles à imprimer (30);
des moyens d'impression (4) pour imprimer des informations de caractère mémorisées dans lesdits moyens de mémorisation (12) sur lesdites feuilles à imprimer (30) alimentées par lesdits moyens d'alimentation (20); et
des moyens de commande (10) pour commander l'imprimante;
ladite partie de réception recevant lesdites feuilles à imprimer (30) soit dans une direction prédéterminée, soit dans une direction orthogonale à la direction prédéterminée, pour alimenter lesdites feuilles à imprimer (30) chargées dans ladite direction prédéterminée et dans la direction orthogonale à ladite direction prédéterminée, à partir de ladite partie de réception;
des moyens de définition (6a) étant prévus pour définir un format d'impression en désignant une direction de ladite feuille à imprimer (30) qui doit être alimentée et une direction d'alignement de caractères à imprimer correspondant soit à un manière verticale d'écrire, soit à une manière latérale d'écrire;
caractérisée en ce que des moyens de détection (18) sont prévus pour détecter la direction desdites feuilles à imprimer (30) alimentées par lesdits moyens d'alimentation (20); et en ce que
lesdits moyens de commande (10) comprennent également:
des moyens de détermination (15) pour déterminer si oui ou non la direction effective desdites feuilles à imprimer (30) détectée par lesdits moyens de détection (18) correspond à la direction qui a été définie par lesdits moyens de définition (6a) pour lesdites feuilles à imprimer (30) qui doivent être alimentées; et
des moyens de lecture (15) pour lire les informations de caractère mémorisées dans lesdits moyens de mémorisation (12), tandis que, en réponse à la détermination d'une non-correspondance par lesdits moyens de détermination (15), chaque caractère est tourné de 90° à l'aide de moyens de translation d'adresses adaptés de manière telle que les informations de caractère à imprimer avec une écriture latérale dans une rangée haute extrême de la feuille à imprimer (30) alimentée dans ladite direction prédéterminée sont imprimées avec une écriture verticale dans une colonne droite extrême d'une feuille à imprimer alimentée orthogonalement à ladite direction prédéterminée,
de sorte que les moyens de commande commandent l'imprimante de telle manière que même lorsque la direction effective desdites feuilles à imprimer (30) détectée par lesdits moyens de détection (18) ne correspond pas à celle qui a été définie par lesdits moyens de définition (6a) pour ladite feuille à imprimer (30) qui doit être alimentée, les informations de caractère mémorisées dans lesdits moyens de mémorisation (12) sont lues et appliquées auxdits moyens d'impression (4) de sorte que l'impression est exécutée dans le format d'impression qui a été défini par lesdits moyens de définition (6a).
